# EUROPEAN PATENT APPLICATION

(11) **EP 4 145 777 A1**
(43) Date of publication of application: **08.03.2023**
(21) Application number: 21795621.8
(22) Date of filing: 25.04.2021
(51) Int. Cl.: H04L 12/70

(54) **MESSAGE CLASSIFICATION METHOD AND APPARATUS, ELECTRONIC DEVICE, AND READABLE MEDIUM**

(30) Priority: 27.04.2020 CN 202010348580
(71) Applicant: Sanechips Technology Co., Ltd., Shenzhen, Guangdong 518055 (CN)
(72) Inventor: WANG, Siyu, Shenzhen, Guangdong 518055 (CN); LIU, Fengsong, Shenzhen, Guangdong 518055 (CN); LI, Ning, Shenzhen, Guangdong 518055 (CN); ZHU, Zhihua, Shenzhen, Guangdong 518055 (CN); LIU, Hengqi, Shenzhen, Guangdong 518055 (CN)
(74) Representative: Ipsilon
(86) International application number: PCT/CN2021/089612
(87) International publication number: WO 2021/218854

(57) **Abstract**

The present disclosure provides a message classification method and apparatus, an electronic device and a readable medium. The method includes: searching a first multi-bit short tree set according to a search key value of a message to be classified to obtain a second message classification rule set matched with the message to be classified (110), with the first multi-bit short tree set including multi-bit short trees which are decision trees constructed according to rules in a first message classification rule set; and classifying the message to be classified according to the rules in the second message classification rule set to determine a message type of the message to be classified (120).

## Description

### TECHNICAL FIELD

Embodiments of the present disclosure relate to the technical field of communications, and in particular, to a message classification method and apparatus, an electronic device and a readable medium.

### BACKGROUND

With the gradual increase in bandwidths of physical transmission media and the explosive increase in the number of network terminals, more and more rules need to be followed in communication networks. Meanwhile, the evolution of communication network protocols leads to more different classification needs, and a classification problem gradually becomes a bottleneck restricting transmission rates of the communication networks. At present, classification of Internet Protocol (IP) packets can be carried out with the following methods, which specifically include: a hardware concurrent comparison method based on Ternary Content Addressable Memory (TCAM), hash-based algorithms, spatial decomposition-based algorithms, and decision tree-based algorithms. A core idea of the decision tree-based algorithms is to continuously divide a rule set according selected appropriate decision contents until all rules are completely distinguished.

However, the existing decision tree-based algorithms are mostly implemented by software, and are poorer in classification efficiency and stability of a message compared with the hardware method; moreover, a few feasible decision tree-based message classification methods that are implemented by hardware cannot support dynamic download of rule lists, and have to acquire all rule sets in advance and perform a large amount of preprocessing. Thus, shapes and densities of the decision trees cannot be controlled, with the result that performance of the decision tree-based algorithms is limited.

### SUMMARY

The embodiments of the present disclosure provide a message classification method and apparatus, an electronic device and a readable medium.

In the first aspect, an embodiment of the present disclosure provides a message classification method, including: searching a first multi-bit short tree set according to a search key value of a message to be classified to obtain a second message classification rule set matched with the message to be classified, wherein the first multi-bit short tree set includes multi-bit short trees which are decision trees constructed according to rules in a first message classification rule set; and classifying the message to be classified according to the rules in the second message classification rule set to determine a message type of the message to be classified.

In the second aspect, an embodiment of the present disclosure provides a message classification apparatus, including: a search module configured to search a first multi-bit short tree set according to a search key value of a message to be classified to obtain a second message classification rule set matched with the message to be classified, wherein the first multi-bit short tree set includes multi-bit short trees which are decision trees constructed according to rules in a first message classification rule set; and a classification module configured to classify the message to be classified according to the rules in the second message classification rule set to determine a message type of the message to be classified.

In the third aspect, an embodiment of the present disclosure provides an electronic device, including: one or more processors; and a memory having one or more programs stored thereon. When the one or more programs are executed by the one or more processors, the one or more processors are caused to carry out the method described in the first aspect.

In the fourth aspect, an embodiment of the present disclosure provides a computer-readable medium having a computer program stored thereon. When the computer program is executed by a processor, the method described in the first aspect is carried out.

### BRIEF DESCRIPTION OF DRAWINGS

The accompanying drawings are intended to provide a further understanding of the embodiments of the present disclosure and constitute a part of the specification. Together with the embodiments of the present disclosure, the drawings are used to explain the present disclosure, but do not constitute any limitation to the present disclosure. The above and other features and advantages will become more apparent to those of ordinary skill in the art from the description of exemplary embodiments with reference to the drawings. In the drawings:
FIG. 1 is a flowchart illustrating a message classification method according to an embodiment of the present disclosure.
FIG. 2 is a schematic structural diagram of a multi-bit short tree according to the present disclosure.
FIG. 3 is a flowchart illustrating a method of inserting a message classification rule to be updated into a multi-bit short tree according to the present disclosure.
FIG. 4 is a flowchart illustrating a message classification method according to another embodiment of the present disclosure.
FIG. 5 is a block diagram of a message classification apparatus according to an embodiment of the present disclosure.
FIG. 6 is a block diagram of a search module implemented in the form of a multi-bit short tree according to the present disclosure.
FIG. 7 is a block diagram of a message classification apparatus according to another embodiment of the present disclosure.
FIG. 8 is a structural diagram illustrating exemplary hardware architecture of an electronic device according to the message classification method and the message classification apparatus provided by the embodiments of the present disclosure.

### DETAIL DESCRIPTION OF EMBODIMENTS

In order to enable those of ordinary skill in the art to better understand the technical solutions of the present disclosure, a method and apparatus, an electronic device and a computer-readable medium provided by the present disclosure are described in detail below with reference to the drawings.

Exemplary embodiments will be described more fully below with reference to the drawings, but the exemplary embodiments described herein may be embodied in different forms, and should not be interpreted as being limited to embodiments described herein. Rather, the embodiments are provided to make the present disclosure thorough and complete, and are intended to enable those of ordinary skill in the art to fully understand the scope of the present disclosure.

The terms "first" and "second" in the description, claims and drawings of the present disclosure are used for distinguishing between similar objects, but not necessarily for describing a particular order or chronological order. In addition, the terms "include" or "comprise" or any other variation thereof are intended to indicate a non-exclusive inclusion, so that a process, method, system, product or equipment, which includes a series of operations or units, is not limited to including those listed operations or units, but can also include other operations or units which are not explicitly listed or which are inherent in such process, method, product or equipment.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In the related technology, the existing decision tree-based algorithms are mostly implemented by software, and are poorer in classification efficiency and stability of a message compared with the hardware method. Moreover, a few decision tree-based message classification methods that are implemented by hardware cannot support dynamic download of rule lists, and have to acquire all rule sets in advance and perform a large amount of preprocessing. Thus, shapes and densities of decision trees cannot be controlled, with the result that performance of the decision tree-based algorithms is limited.

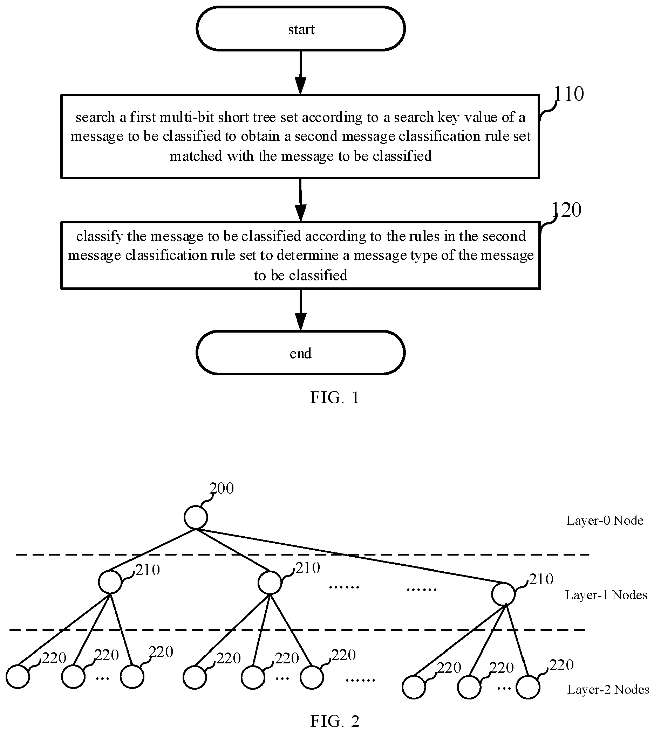

FIG. 1 is a flowchart illustrating a message classification method according to an embodiment of the present disclosure. The message classification method can be applied to a message classification apparatus. As shown in FIG. 1, the message classification method includes the following steps.

In step 110, a first multi-bit short tree set is searched according to a search key value of a message to be classified to obtain a second message classification rule set matched with the message to be classified.

The message to be classified includes the search key value, which includes several fields extracted from the complete message to be classified, for example, the search key value includes some identifiers in header information of the message to be classified. The first multi-bit short tree set includes multi-bit short trees which are decision trees constructed according to rules in a first message classification rule set.

Compared with a conventional single-bit tree (i.e., a binary tree), each node in each multi-bit short tree may have a plurality of subtree branches. Moreover, the multi-bit short tree has fewer layers (levels) of tree nodes, for example, the multi-bit short tree has merely three or four layers of tree nodes. A decision bit corresponding to a root node of the multi-bit short tree is obtained by processing the rules in the first message classification rule set; and the number of the layers of the tree nodes of the multi-bit short tree is specifically determined according to the number of the decision bits. The number of the decision bits is an integer greater than or equal to 1.

FIG. 2 is a schematic structural diagram of a multi-bit short tree in an implementation. As shown in FIG. 2, the multi-bit short tree includes a three-layer tree structure, which specifically includes a layer-0 node (i.e., the root node 200), layer-1 nodes, and layer-2 nodes. The layer-1 nodes include a plurality of first-layer tree nodes 210; and the layer-2 nodes include a plurality of leaf nodes 220. All the leaf nodes 220 of the multi-bit short tree are located at the lowermost layer and the multi-bit short tree is a full tree. The advantage of building the multi-bit short tree into a full tree is that the rules in the first message classification rule set can be directly stored in a Random Access Memory (RAM) merely according to simple decision logic, without considering a problem of uncertain leaf layers of the existing decision tree-based algorithms, so that the shapes and densities of the decision trees can be controlled, and the performance of the algorithms can be improved.

In some implementations, the step 110 may be carried out as follows: concurrently searching the multi-bit short trees in the first multi-bit short tree set according to the search key value to obtain a primary message classification rule set; and comparing the search key value with the rules in the primary message classification rule set, to obtain the second message classification rule set through screening, with the rules in the second message classification rule set being the rules matched with the message to be classified.

Specifically, the search key value is used as an index, each layer of the tree nodes and each leaf node of each multi-bit short tree in the first multi-bit short tree set are concurrently searched until the message classification rules corresponding to the search key value are found, and the message classification rules form the primary message classification rule set. Then, the search key value and each message classification rule in the primary message classification rule set are subjected to fine comparison (e.g., bit-level comparison), and the screening is performed to obtain the second message classification rule set. Thus, the rules in the second message classification rule set are more suitable for the classification of the message to be classified.

In step 120, the message to be classified is classified according to the rules in the second message classification rule set to determine a message type of the message to be classified.

In some implementations, the step 120 may be carried out as follows: acquiring priority levels corresponding to the rules in the second message classification rule set; performing priority arbitration on the rules in the second message classification rule set according to the priority levels to generate an optimal message classification rule; and classifying the message to be classified according to the optimal message classification rule to determine the message type of the message to be classified.

It should be noted that the priority levels corresponding to the rules in the second message classification rule set may be set manually, or may be determined according to matching degrees of the different rules and the message to be classified. The way of setting the priority levels described herein is merely for illustration, and other ways of setting the priority levels also fall within the scope of the present disclosure, and will not be described in detail here.

Specifically, the message to be classified may be classified with a few-escape-bucket classification method or a TCAM message classification method, thereby generating a few-escape-bucket classification rule or a TCAM classification rule. Then, the priority arbitration is performed again on the optimal message classification rule, the few-escape-bucket classification rule and the TCAM classification rule to generate a final message classification rule; and the message to be classified is classified according to the final message classification rule to obtain a more accurate message type of the message to be classified. It should be noted that the above description of the message classification method is merely for illustration, and the message classification method may be specifically set according to specific needs. Other message classification methods that are not illustrated herein may be used together with the message classification method provided by the present disclosure, so as to obtain a more accurate message classification method by performing the priority arbitration on a plurality of generated message classification rules.

In this embodiment, the message to be classified is acquired, the first multi-bit short tree set is searched according to the search key value of the message to be classified to obtain the second message classification rule set matched with the message to be classified, with the first multi-bit short tree set including the multi-bit short trees which are the decision trees constructed according to the first message classification rule set. Due to the relatively short tree shapes of the multi-bit short trees, a hardware structure adopting the message classification method has a relatively small number of pipeline stages, which can reduce a search delay. By classifying the message to be classified according to the rules in the second message classification rule set to determine the message type of the message to be classified, classification correctness and accuracy of the message to be classified can be improved. For different message classification rules, settings of a hardware resource do not need to be changed, and good expansibility can be realized.

In an embodiment, before the step 120, the method may further include: step 130, inserting a message classification rule to be updated into a multi-bit short tree, or step 140, deleting a message classification rule to be deleted which is stored in a multi-bit short tree.

In an implementation, the constructed multi-bit short trees may be associated with each other using a linked list to form the multi-bit short tree set, the message classification rule to be updated is inserted into a certain tree in the multi-bit short tree set, or the insertion of the message classification rule may be carried out by adopting other set forms. The insertion of the rule may trigger reconstruction of a certain tree node or some tree nodes of a single multi-bit short tree or may trigger local reconstruction of a plurality of multi-bit short trees, the reconstruction may lead to updating requests of multiple pieces of RAM content, which may be inserted piece by piece by adopting a bubble method, and an updating principle of "first inserting and then deleting" is followed, so as to ensure that the system still has a real-time searching capability while performing the updating.

The above way of carrying out the insertion is merely for illustration and may be specifically set according to practical applications, and other ways of carrying out the insertion that are not illustrated herein also fall within the scope of the present disclosure, and will not be described in detail here.

In this embodiment, the message classification rules stored in the multi-bit short trees are updated by performing an insertion step or a deletion step on the multi-bit short trees, so that a dynamical support for a change of the message classification rules can be ensured. When applying the multi-bit short trees to the hardware structure, there is no need to extract all the message classification rules in advance or perform a large amount of preprocessing, dynamic updating of the message classification rules can be realized by performing the insertion step or the deletion step on the multi-bit short trees, thereby avoiding complicated preprocessing and improving processing efficiency.

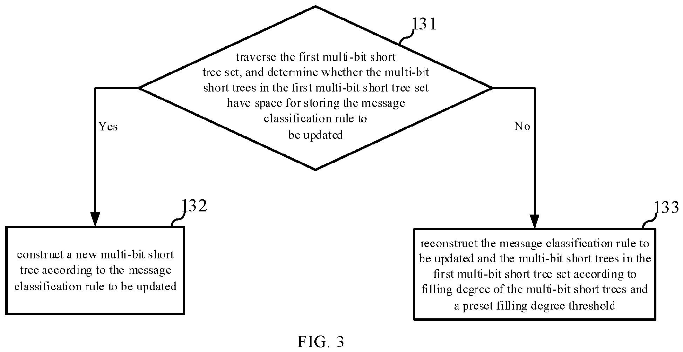

In an embodiment, FIG. 3 is a flowchart illustrating a method of inserting a message classification rule to be updated into a multi-bit short tree. As shown in FIG. 3, inserting the message classification rule to be updated into the multi-bit short tree in the step 130 includes steps 131 to 133.

In step 131, the first multi-bit short tree set is traversed, and it is determined whether the multi-bit short trees in the first multi-bit short tree set have space for storing the message classification rule to be updated.

It should be noted that the step 132 is performed in response to determining that the multi-bit short trees in the first multi-bit short tree set have the space for storing the message classification rule to be updated, and the step 133 is performed in response to determining that the multi-bit short trees in the first multi-bit short tree set do not have the space for storing the message classification rule to be updated.

In step 132, a new multi-bit short tree is constructed according to the message classification rule to be updated.

Specifically, the message classification rule to be updated may be processed by means of bit decision to determine storage address information of each layer of tree nodes of the new multi-bit short tree; and finally, the message classification rule to be updated is filled into the new multi-bit short tree to complete the construction of the new multi-bit short tree.

In step 133, the message classification rule to be updated and the multi-bit short trees in the first multi-bit short tree set are reconstructed according to a filling degree of the multi-bit short trees and a preset filling degree threshold.

It should be noted that the reconstruction may be local reconstruction of the multi-bit short trees in the first multi-bit short tree set, that is, inserting the message classification rule to be updated into the first multi-bit short tree set; or, the reconstruction may be reselecting decision bits for the message classification rule to be updated and the rules in the multi-bit short trees in the multi-bit short tree set, and building a new multi-bit short tree set.

In an implementation, the step 133 may be carried out as follows: obtaining a second multi-bit short tree set by selecting from the first multi-bit short tree set, with the filling degree of the multi-bit short trees in the second multi-bit short tree set being less than the preset filling degree threshold; obtaining a third multi-bit short tree set by reconstructing the message classification rule to be updated and the second multi-bit short tree set; determining whether the number of the multi-bit short trees in the third multi-bit short tree set is less than or equal to the number of the multi-bit short trees in the first multi-bit short tree set; and if the number of the multi-bit short trees in the third multi-bit short tree set is less than or equal to the number of the multi-bit short trees in the first multi-bit short tree set, it is determined that the reconstruction is successful, and the multi-bit short trees in the second multi-bit short tree set are partially updated according to the message classification rule to be updated.

In an implementation, the reconstruction of the message classification rule to be updated and the multi-bit short trees in the first multi-bit short tree set may be carried out using a linked list. For example, the first multi-bit short tree set is set as a Fat Tree (FT) linked list, which is denoted by FT_list; the message classification rule to be updated is marked as a pointer p_rule; and a currently traversed temporary linked list of the first multi-bit tree set is marked as a pointer p_FT.

First, FT_list is traversed to try to insert p_rule into the current p_FT. If the insertion is successful, a message of successful insertion of the classification rule to be updated into the first multi-bit short tree set is returned; otherwise, traversing of FT_list is continued. If p_rule cannot be inserted after the whole FT_list is traversed, the reconstruction of the message classification rule to be updated and the multi-bit short trees in the first multi-bit short tree set is triggered.

A specific process of the reconstruction includes: comparing the filling degree of each multi-bit short tree in the first multi-bit short tree set FT_list with the preset filling degree threshold to determine whether the filling degree of each multi-bit short tree in the first multi-bit short tree set FT_list is less than the preset filling degree threshold, and screening out the multi-bit short trees whose filling degree is less than the preset filling degree threshold to obtain the second multi-bit short tree set; putting the second multi-bit short tree set and the message classification rule to be updated (i.e., p_rule) in a temporary rule set, and marking the temporary rule set as Rtemp; and then reconstructing the multi-bit short trees in the temporary rule set Rtemp to generate the third multi-bit short tree set.

It is determined whether the number of the multi-bit short trees in the third multi-bit short tree set is less than or equal to the number of the multi-bit short trees in the first multi-bit short tree set FT_list; if the number of the multi-bit short trees in the third multi-bit short tree set is less than or equal to the number of the multi-bit short trees in the first multi-bit short tree set FT_list, it is determined that the reconstruction is successful, and all the multi-bit short trees in the second multi-bit short tree set are replaced with the multi-bit short trees in the temporary rule set (i.e., Rtemp); and if the number of the multi-bit short trees in the third multi-bit short tree set is not less than or equal to the number of the multi-bit short trees in the first multi-bit short tree set FT_Iist, the first multi-bit short tree set FT_list is kept unchanged, a new FT resource is applied for, and the message classification rule to be updated p_rule is inserted to construct a new multi-bit short tree, which is a decision tree generated according to the message classification rule to be updated.

In this embodiment, by reconstructing the message classification rule to be updated and the multi-bit short trees in the first multi-bit short tree set according to the filling degree of the multi-bit short trees and the preset filling degree threshold, the multi-bit short tree in the first multi-bit short tree set can be updated in time, the change of the message classification rules can be dynamically supported, the complicated preprocessing can be avoided, and the processing efficiency can be improved.

In an embodiment, deleting the message classification rule to be deleted which is stored in the multi-bit short tree in the step 140 may be carried out as follows: performing a matching search on each branch node of the multi-bit short trees in the first multi-bit short tree set according to the message classification rule to be deleted to determine a branch node to be deleted; and deleting the message classification rule to be deleted which is stored in the branch node to be deleted.

Specifically, each branch node of the multi-bit short trees in the first multi-bit short tree set may be searched according to a search key value of the message classification rule to be deleted to obtain storage address information corresponding to the branch node to be deleted, and then the message classification rule to be deleted is acquired according to the storage address information corresponding to the branch node to be deleted and is deleted.

In this embodiment, by deleting the message classification rule to be deleted which is stored in the branch node to be deleted, the useless message classification rule can be deleted from the first multi-bit short tree set. It should be noted that merely the message classification rule is deleted and the branch node to be deleted is still reserved, so as to facilitating storing other message classification rules at the storage address corresponding to the branch node to be deleted during next updating of the message classification rules.

In an embodiment, before the step 120, the method may further include: modifying attribute information of branch nodes in the multi-bit short trees, wherein the attribute information includes a priority level corresponding to a rule in the first message classification rule set.

The attribute information may further include a size of a storage space occupied by the branch nodes, that is, the information about whether a filling degree of current branch nodes is saturated. The attribute information described above is merely for illustration and may be specifically set according to actual needs, and other attribute information that is not described herein also falls within the scope of the present disclosure, and will not be described in detail here.

In this embodiment, by modifying the attribute information of the branch nodes, the priority levels of the message classification rules stored in each branch node can be updated in time, so that the message classification rules can be updated in time. Thus, when the classification of the message to be classified is performed, the message classification rule with the highest priority level can be selected, thereby ensuring classification accuracy of the message to be classified.

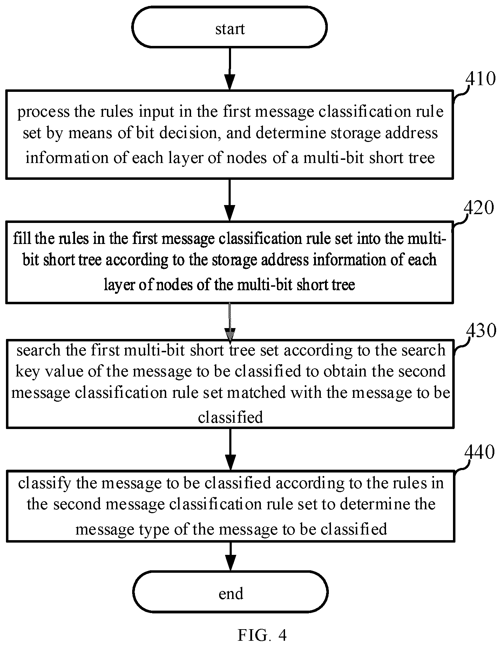

FIG. 4 is a flowchart illustrating a message classification method according to another embodiment of the present disclosure. As shown in FIG. 4, the message classification method specifically includes the following steps.

In step 410, the rules input in the first message classification rule set are processed by means of bit decision, and storage address information of each layer of nodes of a multi-bit short tree is determined.

The bit decision mentioned above is to observe a distribution condition of the respective bits of the rules in the first message classification rule set, perform screening to obtain a bit matched with all of the message classification rules, and then determine the storage address information of each layer of nodes of the multi-bit short tree with the matched bit. Thus, the multi-bit short tree may be matched with the rules in the first message classification rule set, thereby facilitating a subsequent search of the multi-bit short tree.

In step 420, the rules in the first message classification rule set are filled into the multi-bit short tree according to the storage address information of each layer of nodes of the multi-bit short tree.

In some implementations, the step 420 is carried out as follows: grouping the rules in the first message classification rule set to obtain N groups, with N being an integer greater than or equal to 1; determining whether the number of the rules in each group is greater than a preset rule number threshold to obtain a first determination result; extracting groups whose first determination result is Yes (i.e, the number of the rules in the group is greater than the preset rule number threshold), so as to generate a filling set; and filling M message classification rules in each group in the filling set into the multi-bit short tree according to the storage address information of each layer of nodes of the multi-bit short tree, with M being less than or equal to the preset rule number threshold.

It should be noted that, since the rules in the first message classification rule set are not evenly distributed when being grouped, the number of the message classification rules included in each group may vary, such as 1, 2 or 5. When the message classification rules in each group are extracted, it is required to first determine whether the number of the rules in each group is greater than the preset rule number threshold which is an integer greater than or equal to 1.

For example, when the preset rule number threshold is 3, the rules in the first message classification rule set are divided into three groups: the first group includes four message classification rules, the second group includes five message classification rules, and the third group includes six message classification rules. The filling set is generated by respectively extracting one message classification rule from the first group, extracting two message classification rules from the second group and extracting three message classification rules from the third group, so as to allow each multi-bit short tree constructed to store as many rules as possible, thereby utilizing the storage resource to the maximum extent. Particularly, if each group includes a relatively small number of message classification rules, the rules in the first message classification rule set may be filled into the multi-bit short tree at one time, with no need to build a new multi-bit short tree.

In some implementations, after filling the M message classification rules in each group in the filling set into the multi-bit short tree according to the storage address information of each layer of nodes of the multi-bit short tree, the method further includes: recovering the remaining message classification rules except the M message classification rules in each group; and the remaining message classification rules are used to be filled into a next multi-bit short tree.

For example, when the preset rule number threshold is 3, the rules in the first message classification rule set are divided into three groups: the first group includes four message classification rules, the second group includes five message classification rules, and the third group includes six message classification rules. After the first multi-bit short tree is generated by extracting the message classification rules from each group, the remaining message classification rules except M message classification rules in each group need to be recovered, that is, the remaining message classification rules include: one message classification rule in the first group, three message classification rules in the second group, and three message classification rules in the third group. Then the above method is carried out again to obtain a filling set through screening and fill the rules in the filling set into the next multi-bit short tree.

In step 430, the first multi-bit short tree set is searched according to the search key value of the message to be classified to obtain the second message classification rule set matched with the message to be classified.

In step 440, the message to be classified is classified according to the rules in the second message classification rule set to determine the message type of the message to be classified.

It should be noted that the steps 430 and 440 in this embodiment are the same as the steps 110 and 120 in the previous embodiment, and thus will not be repeated here.

In this embodiment, the rules input in the first message classification rule set are processed by means of bit decision, and the storage address information of each layer of nodes of the multi-bit short tree is determined, so that the multi-bit short tree matched with the rules in the first message classification rule set can be obtained; and then the rules in the first message classification rule set are filled into the multi-bit short tree, so that a desired message classification rule can be easily obtained later by searing the multi-bit short tree. Due to the relatively short tree shapes of the multi-bit short trees, the hardware structure adopting the message classification method has a relatively small number of pipeline stages, which can reduce the search delay.

In an embodiment, the step 410 is carried out as follows: processing the rules in the first message classification rule set by means of bit decision, so as to determine K decision bits of the root node of the multi-bit short tree, with K being an integer greater than or equal to 1; determining storage address information of first-layer tree nodes of the multi-bit short tree according to the K decision bits of the root node; dividing the rules in the first message classification rule set into 2^{k} first-layer message classification rule subsets; taking each first-layer message classification rule subset as a new first message classification rule set, processing the rules in each first-layer message classification rule subset by means of bit decision to determine the K decision bits of the first-layer tree nodes of the multi-bit short tree; and determining storage address information of second-layer tree nodes according to the storage address information of the first-layer tree nodes and the K decision bits of the first-layer tree nodes.

It should be noted that each message classification rule in the first message classification rule set includes A domains, with A being an integer greater than or equal to 1. The A domains are A fields extracted from a complete data message, and the A domains include B bits in total. Since one bit can represent two different message classification rules (e.g., 00 and 01), B is an integer greater than or equal to 1.

For example, Table 1 is a rule format table of the message classification rules. In Table 1, A is 3 and B is 12, that is, a message classification rule includes three domains (i.e., Domain 1, Domain 2, and Domain 3), each domain has four bits (for example, Domain 1 in the rule A is represented by 1100, Domain 2 in the rule A is represented by 0000, and Domain 3 in the rule A is represented by 10**), and the three domains have twelve bits in total. * means that the bit may be 0 or 1.

**Table 1- rule format table of message classification rules**

| Rule No. | Domain 1 | Domain 2 | Domain 3 |
|---|---|---|---|
| A | 1100 | 0000 | 10^{∗∗} |
| B | 101^{∗} | 0000 | 001^{∗} |
| C | 0011 | 1110 | ^{∗∗∗∗} |
| D | 111^{∗} | 1101 | 1111 |

At least one feasible combination of decision bits may be obtained through observation of Table 1. For example, the 2^{nd} bit of Domain 1 and the 1^{st} bit of Domain 2 are used as the decision bits. The two bits may correspond to four values: {00, 01, 10, 11}, and each of the different values corresponds to one message classification rule, that is, 00 corresponds to a message classification rule B, 01 corresponds to a message classification rule C, 10 corresponds to a message classification rule A, and 11 corresponds to a message classification rule D.

Then, the storage address information of the tree nodes of the multi-bit short tree is determined according to the two decision bits. If the storage address information is represented by 10 bits, the remaining bits of the storage address information except the decision bits are filled with 0. That is, storage addresses corresponding to the message classification rules {A, B, C, D} are {Address A, Address B, Address C, Address D} respectively, where Address A=10 000 00000, Address B=00 000 00000, Address C=01 000 00000, and Address D=11 000 00000.

Moreover, when the multi-bit short tree is implemented in the hardware structure, each layer of the tree nodes of the multi-bit short tree corresponds to one stage of a pipeline in the hardware structure. Since merely four rules, i.e. the rules A, B, C and D, are stored in the current multi-bit short tree, the multi-bit short tree merely includes a root node and two layers of tree nodes. Therefore, when the multi-bit short tree is applied to the hardware structure, the number of the stages of the pipeline in the corresponding hardware structure is 3, and bit decision needs to be performed twice and concurrent comparison of a plurality of message classification rules in leaf nodes needs to be performed once when the multi-bit short tree is searched according to the search key value of the message to be classified.

For example, the message to be classified includes two search key values: key1=0011 1110 1100 and key2=0011 1011 0000. When the multi-bit short tree is searched with key1 and key2 taken as indexes, Address C (i.e., 01 000 00000) needs to be searched out to obtain the message classification rule C stored at Address C. Then, the message classification rule C, key1 and key2 are subjected to bit-level accurate comparison so at to obtain the second message classification rule set, that is, key1 corresponds to the message classification rule C while key2 does not have a corresponding matched message classification rule. Finally, the message to be classified is classified according to the message classification rule C to obtain the message type of the message to be classified.

Since the multi-bit short tree generated with the above method has a relatively small number of tree node layers, the hardware structure corresponding to the multi-bit short tree has a relatively small number of pipeline stages, so that the search delay can be reduced and a processing speed can be accelerated in a search of the message classification rules in the multi-bit short tree.

In an implementation, processing the rules in the first message classification rule set by means of bit decision to determine the K decision bits of the root node of the multi-bit short tree includes: respectively calculating bit discrimination of each bit of the rules (or between bits of the rules) in the first message classification rule set to obtain a bit discrimination set; and determining the K decision bits according to a location of each bit, a bit discrimination threshold and each bit discrimination in the bit discrimination set.

It should be noted that the bit discrimination may be calculated by the Cost Function, which is a function for mapping a random event or a value of a random variable related to the random event to a non-negative real number to represent a "risk" or a "loss" of the random event.

Specifically, the bit discrimination of each bit of the rules in the first message classification rule set needs to be calculated, the bit discrimination of each bit is compared with the bit discrimination threshold (e.g., 0.8) to sort the bits, and bits whose bit discrimination is greater than 0.8 are extracted out, and then the set of the bits having the bit discrimination greater than 0.8 are screened according to the location of each bit to obtain the K decision bits. Moreover, each time the screening is performed, K bits having the highest bit discrimination are randomly selected from the A domains of the rules in the current message classification rule set.

In some scenarios, since the locations of the bits and the quantities of the bits concerned by different message classification rules are different, when the quantities of the bits concerned by the different message classification rules are not sufficient to effectively group the rules in the first message classification rule set, it is possible to select K bits that are concerned by most of the rules in the first message classification rule set and have the highest bit discrimination as the decision bits. For the remaining message classification rules in the first message classification rule set except the message classification rules corresponding to the decision bits, the remaining message classification rules may be stored in a plurality of groups simultaneously by means of rule copying, or may be selected out to wait for the construction of the next multi-bit short tree.

In this embodiment, the rules in the first message classification rule set are processed by means of bit decision to determine the K decision bits of the root node of the multi-bit short tree, and the storage address information of the first-layer tree nodes of the multi-bit short tree is determined according to the K decision bits; and then the rules in the first message classification rule set are divided into the 2^{k} first-layer message classification rule subsets each taken as a new first message classification rule set, and each new first message classification rule set is continued to be processed by means of bit decision, so as to obtain the storage address information of each layer of the tree nodes of the multi-bit short tree. Since the multi-bit short tree has a relatively small number of tree node layers, the hardware structure corresponding to the multi-bit short tree has a relatively small number of pipeline stages, so that the search delay can be reduced and the processing speed can be accelerated in the search of the message classification rules in the multi-bit short tree.

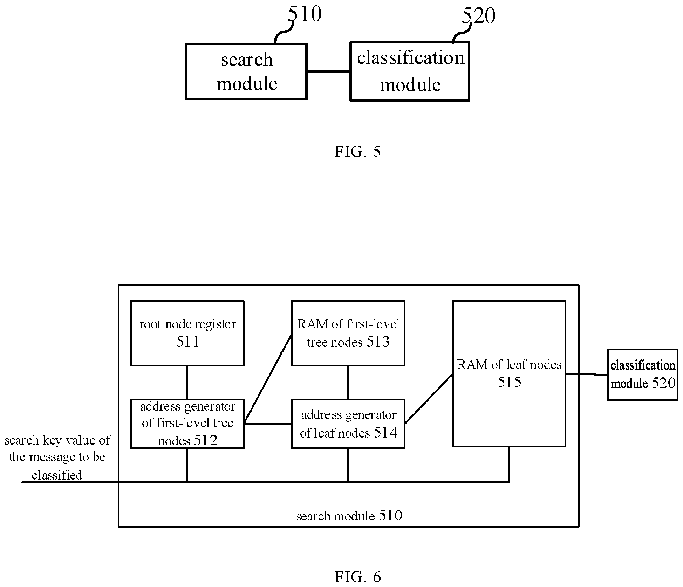

FIG. 5 is a schematic structural diagram of a message classification apparatus according to an embodiment of the present disclosure, reference may be made to the related descriptions of the above embodiments for specific implementation of the device, and the repeated descriptions are omitted below. It should be noted that the specific implementation of the apparatus according to this embodiment is not limited to the above embodiments, and other embodiments that are not illustrated herein also fall within the protection scope of the apparatus.

As shown in FIG. 5, the message classification apparatus specifically includes: a search module 510 configured to search a first multi-bit short tree set according to a search key value of a message to be classified to obtain a second message classification rule set matched with the message to be classified, with the first multi-bit short tree set including multi-bit short trees which are decision trees constructed according to rules in a first message classification rule set; and a classification module 520 configured to classify the message to be classified according to the rules in the second message classification rule set to determine a message type of the message to be classified.

In an implementation, the search module 510 is implemented in the form of a multi-bit short tree. As shown in FIG. 6, the search module 510 includes: a root node register 511, an address generator of first-layer tree nodes 512, an RAM of first-layer tree nodes 513, an address generator of leaf nodes 514, and an RAM of leaf nodes 515.

The root node register 511 is configured to store decision contents (e.g., location information of 5 decision bits) of the root node of the multi-bit short tree.

The address generator of first-layer tree nodes 512 is configured to detect the input search key value of the message to be classified, compare the search key value with the decision contents stored in the root node register 511 to obtain a comparison result, and output the comparison result to the RAM of first-layer tree nodes 513.

The RAM of first-layer tree nodes 513 is configured to store decision contents of first-layer tree nodes of the multi-bit short tree.

The address generator of leaf nodes 514 is configured to acquire address information of two bits input by the address generator of first-layer tree nodes 512 (or to acquire the decision contents of the first-layer tree nodes from the RAM of first-layer tree nodes 513, that is, address information of five bits), simultaneously perform precise addressing on each leaf node according to the address information of the five bits and acquire the remaining bits of location information of each leaf node, determine the location information of a leaf node matched with the search key value according to the remaining bits and the address information of the five bits, and then search the RAM of leaf nodes 515 according to the location information.

The RAM of leaf nodes 515 is configured to take out all message classification rules corresponding to the search key value of the message to be classified, generate a message classification rule set corresponding to the search key value, that is, the second message classification rule set, and then output the rules in the second message classification rule set to the classification module 520.

In this embodiment, the message to be classified is acquired with an acquisition module, and the first multi-bit short tree set is searched with the search module according to the search key value of the message to be classified to obtain the second message classification rule set matched with the message to be classified, with the first multi-bit short tree set including the multi-bit short trees which are the decision trees constructed according to the first message classification rule set. Due to relatively short tree shapes of the multi-bit short trees, a hardware structure adopting the message classification apparatus has a relatively small number of pipeline stages, which can reduce a search delay. Then, by using the classification module to classify the message to be classified according to the rules in the second message classification rule set to determine the message type of the message to be classified, classification correctness and accuracy of the message to be classified can be improved. For different message classification rules, settings of a hardware resource do not need to be changed, and good expansibility can be realized.

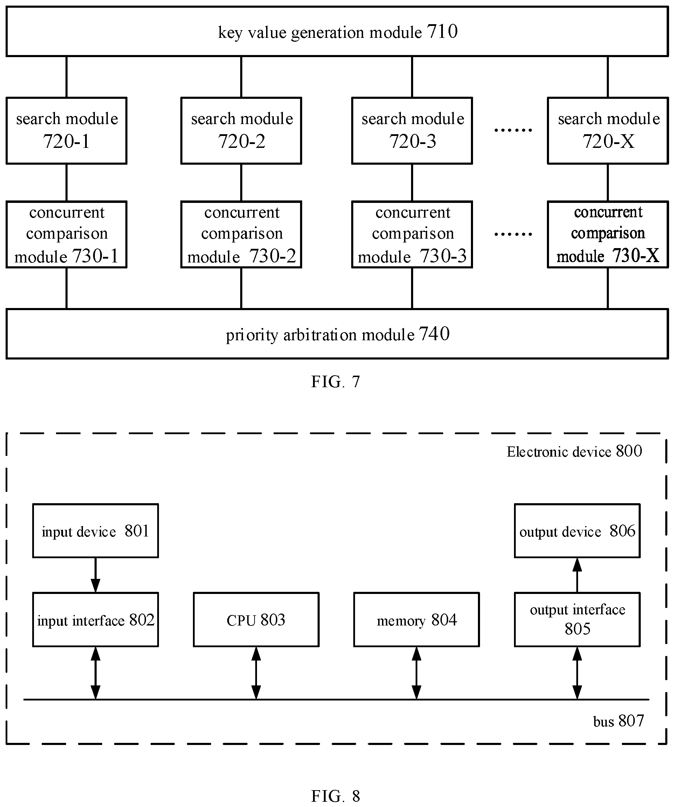

FIG. 7 is a block diagram of a message classification apparatus according to another embodiment of the present disclosure. As shown in FIG. 7, the message classification apparatus specifically includes: a key value generation module 710, a plurality of search modules (e.g., a search module 720-1, a search module 720-2, a search module 720-3 ...... a search module 720-X, with X being an integer greater than or equal to 1), a plurality of concurrent comparison modules (e.g., a concurrent comparison module 730-1, a concurrent comparison module 730-2, a concurrent comparison modules 730-3 ...... a concurrent comparison modules 730-X), and a priority arbitration module 740.

It should be noted that each search module searches a multi-bit short tree corresponding thereto, a plurality of multi-bit short trees form the first multi-bit short tree set, and the multi-bit short trees are the decision trees constructed according to the rules in the first message classification rule set.

The key value generation module 710 is configured to process header information of the message to be classified to generate the search key value, which represents a core bit of a key field of the message to be classified. The key value generation module 710 sends the generated search key value to all the search modules, e.g., the search module 720-1, the search module 720-2, the search modules 720-3 ...... the search module 720-X.

Each search module is configured to search the multi-bit short tree layer by layer according to the search key value, and is capable of outputting the message classification rules stored in one multi-bit short tree, and the output message classification rules may include 0 message classification rule, one message classification rule or at most M message classification rules, with M being an integer greater than or equal to 1. Each search module outputs the at most M message classification rules and the search key value together to a corresponding concurrent comparison module. For example, the search module 720-1 outputs the at most M output message classification rules and the search key value to the concurrent comparison module 730-1, and the search module 720-2 outputs the at most M output message classification rules and the search key value to the concurrent comparison module 730-2.

Each concurrent comparison module is configured to perform bit-level accurate comparison on the at most M message classification rules and the search key value that are obtained to generate the second message classification rule set, and then output the message classification rules in the second message classification rule set to the priority arbitration module 740.

The priority arbitration module 740 is configured to perform priority arbitration on each message classification rule in the second message classification rule set, for example, the priority arbitration module 740 compares priority levels of all the message classification rules, sort the message classification rules according to the priority levels to obtain a message classification rule with the highest priority level, and use the message classification rule with the highest priority level to classify the message to be classified, so as to obtain the message type of the message to be classified.

In this embodiment, the multi-bit short trees are searched with the plurality of search modules to obtain a plurality of groups of message classification rules corresponding to the search key value; then, the search key value and the corresponding message classification rules are output to the corresponding concurrent comparison modules, so that the plurality of concurrent comparison modules can perform accurate comparison on the message classification rules at the same time, which can increase processing efficiency and rapidly generate the second message classification rule set; and finally, the rules in the second message classification rule set are subjected to the priority arbitration by the priority arbitration module to obtain the message classification rule with the highest priority level, and the message to be classified is classified according to the message classification rule with the highest priority level, thereby ensuring classification accuracy of the message.

It should be noted that all the modules described in this embodiment are logic modules; and in practical applications, one logic unit may be one physical unit, or a part of one physical unit, or be implemented as a combination of a plurality of physical units. Moreover, the present disclosure is not limited to the specific configurations and processes which are described in the above embodiments and shown in the drawings. Detailed description of known methods is omitted herein for convenience and conciseness of the description. Specific operation processes of the systems, modules and units described above may be found in the corresponding processes in the above method embodiments, and will not be repeated here.

FIG. 8 is a structural diagram illustrating an exemplary hardware architecture of an electronic device according to the message classification method and the message classification apparatus provided by the embodiments of the present disclosure.

As shown in FIG. 8, an electronic device 800 includes an input device 801, an input interface 802, a central processing unit (CPU) 803, a memory 804, an output interface 805, and an output device 806. The input interface 802, the CPU 803, the memory 804, and the output interface 805 are connected to each other via a bus 807, and the input device 801 and the output device 806 are connected to the bus 807 through the input interface 802 and the output interface 805 respectively, and are further connected to other components of the electronic device 800.

Specifically, the input device 801 receives input information from the outside, and transmits the input information to the CPU 803 via the input interface 802; the CPU 803 processes the input information based on a computer-executable instruction stored in the memory 804 to generate output information, stores the output information temporarily or permanently in the memory 804, and then transmits the output information to the output device 806 via the output interface 805; and the output device 806 outputs the output information outside the electronic device 800 for being used by a user.

In an embodiment, the memory 804 may be replaced with a chip or circuit (a circuit dedicated to message classification) having a hardware structure of multi-bit short tree, and the chip or circuit is capable of achieving storing of classification rules and searching and matching of a key value.

In an embodiment, the electronic device 800 shown in FIG. 8 may be implemented as a network device, which may include: a memory configured to store a program; and a processor configured to execute the program stored in the memory to perform the message classification method described in any of the above embodiments.

In an embodiment, the process described above with reference to the flowcharts may be implemented as computer software programs. For example, an embodiment of the present disclosure provides a computer program product, including a computer program tangibly included on a machine-readable medium, and the computer program includes program code configured to perform the method illustrated by the flowcharts. In such embodiment, the computer program may be downloaded and installed from a network, and/or installed from a removable storage medium.

It should be understood by those of ordinary skill in the art that the functional modules/units in all or some of the operations, the systems and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit (ASIC) or a Field-Programmable Gate Array (FPGA). Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated otherwise, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A message classification method, comprising:
searching a first multi-bit short tree set according to a search key value of a message to be classified to obtain a second message classification rule set matched with the message to be classified, wherein the first multi-bit short tree set comprises multi-bit short trees which are decision trees constructed according to rules in a first message classification rule set; and
classifying the message to be classified according to the rules in the second message classification rule set to determine a message type of the message to be classified.

2. The method of claim 1, wherein searching the first multi-bit short tree set according to the search key value of the message to be classified to obtain the second message classification rule set matched with the message to be classified comprises:
concurrently searching the multi-bit short trees in the first multi-bit short tree set according to the search key value to obtain a primary message classification rule set; and
comparing the search key value with the rules in the primary message classification rule set to obtain the second message classification rule set through screening, wherein the rules in the second message classification rule set are rules matched with the message to be classified.

3. The method of claim 1, wherein classifying the message to be classified according to the rules in the second message classification rule set to determine the message type of the message to be classified comprises:
acquiring priority levels corresponding to the rules in the second message classification rule set;
performing priority arbitration on the rules in the second message classification rule set according to the priority levels to generate an optimal message classification rule; and
classifying the message to be classified according to the optimal message classification rule to determine the message type of the message to be classified.

4. The method of any one of claims 1 to 3, wherein before classifying the message to be classified according to the rules in the second message classification rule set to determine the message type of the message to be classified, the method further comprises:
inserting a message classification rule to be updated into a multi-bit short tree, or, deleting a message classification rule to be deleted which is stored in a multi-bit short tree.

5. The method of claim 4, wherein inserting the message classification rule to be updated into the multi-bit short tree comprises:
traversing the first multi-bit short tree set, and determining whether the multi-bit short trees in the first multi-bit short tree set have space for storing the message classification rule to be updated;
in response to determining that the multi-bit short trees in the first multi-bit short tree set have space for storing the message classification rule to be updated, constructing a new multi-bit short tree according to the message classification rule to be updated; and
in response to determining that the multi-bit short trees in the first multi-bit short tree set do not have space for storing the message classification rule to be updated, reconstructing the message classification rule to be updated and the multi-bit short trees in the first multi-bit short tree set according to a filling degree of the multi-bit short trees and a preset filling degree threshold.

6. The method of claim 5, wherein reconstructing the message classification rule to be updated and the multi-bit short trees in the first multi-bit short tree set according to the filling degree of the multi-bit short trees and the preset filling degree threshold comprises:
obtaining a second multi-bit short tree set by selecting from the first multi-bit short tree set, wherein the filling degree of the multi-bit short trees in the second multi-bit short tree set is less than the preset filling degree threshold;
obtaining a third multi-bit short tree set by reconstructing the message classification rule to be updated and the second multi-bit short tree set;
determining whether the number of the multi-bit short trees in the third multi-bit short tree set is less than or equal to the number of the multi-bit short trees in the first multi-bit short tree set; and
in response to determining that the number of the multi-bit short trees in the third multi-bit short tree set is less than or equal to the number of the multi-bit short trees in the first multi-bit short tree set, determining that reconstruction is successful, and partially updating the multi-bit short trees in the second multi-bit short tree set according to the message classification rule to be updated.

7. The method of claim 4, wherein deleting the message classification rule to be deleted which is stored in the multi-bit short tree comprises:
performing a matching search on each branch node of the multi-bit short trees in the first multi-bit short tree set according to the message classification rule to be deleted to determine a branch node to be deleted; and
deleting the message classification rule to be deleted which is stored in the branch node to be deleted.

8. The method of any one of claims 1 to 3, wherein before classifying the message to be classified according to the rules in the second message classification rule set to determine the message type of the message to be classified, the method further comprises:
modifying attribute information of branch nodes in the multi-bit short trees, wherein the attribute information comprises a priority level corresponding to a rule in the first message classification rule set.

9. The method of any one of claims 1 to 3, wherein before searching the first multi-bit short tree set according to the search key value of the message to be classified to obtain the second message classification rule set matched with the message to be classified, the method further comprises:
processing the rules input in the first message classification rule set by means of bit decision, and determining storage address information of each layer of nodes of a multi-bit short tree; and
filling the rules in the first message classification rule set into the multi-bit short tree according to the storage address information of each layer of nodes of the multi-bit short tree.

10. The method of claim 9, wherein processing the rules input in the first message classification rule set by means of bit decision and determining the storage address information of each layer of nodes of the multi-bit short tree comprises:
processing the rules in the first message classification rule set by means of bit decision to determine K decision bits of a root node of the multi-bit short tree, with K being an integer greater than or equal to 1;
determining storage address information of first-layer tree nodes of the multi-bit short tree according to the K decision bits of the root node;
dividing the rules in the first message classification rule set into 2^{k} first-layer message classification rule subsets;
taking each first-layer message classification rule subset as a new first message classification rule set, processing the rules in each first-layer message classification rule subset by means of bit decision to determine K decision bits of the first-layer tree nodes of the multi-bit short tree; and
determining storage address information of second-layer tree nodes according to the storage address information of the first-layer tree nodes and the K decision bits of the first-layer tree nodes.

11. The method of claim 10, wherein processing the rules in the first message classification rule set by means of bit decision to determine the K decision bits of the root node of the multi-bit short tree comprises:
respectively calculating bit discrimination of each bit of the rules in the first message classification rule set to obtain a bit discrimination set; and
determining the K decision bits according to a location of each bit, a bit discrimination threshold and each bit discrimination in the bit discrimination set.

12. The method of claim 9, wherein filling the rules in the first message classification rule set into the multi-bit short tree according to the storage address information of each layer of nodes of the multi-bit short tree comprises:
grouping the rules in the first message classification rule set to obtain N groups, with N being an integer greater than or equal to 1;
determining whether the number of the rules in each group is greater than a preset rule number threshold to obtain a first determination result;
extracting groups whose first determination result is that the number of the rules in the group is greater than the preset rule number threshold, so as to generate a filling set; and
filling M message classification rules in each group in the filling set into the multi-bit short tree according to the storage address information of each layer of nodes of the multi-bit short tree, wherein M is less than or equal to the preset rule number threshold.

13. The method of claim 12, wherein after filling the M message classification rules in each group in the filling set into the multi-bit short tree according to the storage address information of each layer of nodes of the multi-bit short tree, the method further comprises:
recovering the remaining message classification rules except the M message classification rules in each group;
wherein the remaining message classification rules are used to be filled into a next multi-bit short tree.

14. The method of any one of claims 1 to 13, wherein a total number of layers of nodes of a multi-bit short tree is not greater than 4.

15. A message classification apparatus, comprising:
a search module configured to search a first multi-bit short tree set according to a search key value of a message to be classified to obtain a second message classification rule set matched with the message to be classified, wherein the first multi-bit short tree set comprises multi-bit short trees which are decision trees constructed according to rules in a first message classification rule set; and
a classification module configured to classify the message to be classified according to the rules in the second message classification rule set to determine a message type of the message to be classified.

16. An electronic device, comprising:
one or more processors; and
a memory having one or more programs stored thereon, wherein, when the one or more programs are executed by the one or more processors, the one or more processors are caused to carry out the method of any one of claims 1 to 13.

17. A computer-readable medium having a computer program stored thereon, wherein, when the computer program is executed by a processor, the method of any one of claims 1 to 14 is carried out.
